(19) Europäisches Patentamt
European Patent Office
Office européen des brevets

(11) **EP 4 358 011 A1**

(12) **EUROPEAN PATENT APPLICATION**
published in accordance with Art. 153(4) EPC

(43) Date of publication:
**24.04.2024 Bulletin 2024/17**

(21) Application number: **21946168.8**

(22) Date of filing: **14.09.2021**

(51) International Patent Classification (IPC):
**G06Q 50/26** (2012.01)     **G06Q 50/02** (2012.01)
**G06Q 30/06** (2012.01)

(52) Cooperative Patent Classification (CPC):
**G06Q 50/26; G06Q 30/018; G06Q 30/06;
G06Q 40/04; G06Q 50/02**

(86) International application number:
**PCT/KR2021/012455**

(87) International publication number:
**WO 2022/265157 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.06.2021 KR 20210078184**

(71) Applicants:
• **INDUSTRIAL COOPERATION FOUNDATION
CHONBUK NATIONAL UNIVERSITY**
Jeonju-si, Jeollabuk-do 54896 (KR)
• **Melliens Inc.**
Jeonju-si, Jeollabuk-do 54932 (KR)

(72) Inventors:
• **LEE, Hak Kyo**
Jeonju-si, Jeollabuk-do 54960 (KR)
• **HEO, Jae Young**
Jeonju-si, Jeollabuk-do 54955 (KR)
• **SONG, Ki Duk**
Jeonju-si, Jeollabuk-do 54831 (KR)
• **SHIN, Dong Hyun**
Jeonju-si, Jeollabuk-do 54945 (KR)
• **YOON, Jin Weon**
Jeonju-si, Jeollabuk-do 54984 (KR)

(74) Representative: **Weickmann & Weickmann
PartmbB**
Postfach 860 820
81635 München (DE)

(54) **LOW-CARBON PRODUCT CERTIFICATION METHOD AND SYSTEM USING SLAUGHTER HISTORY INFORMATION**

(57)     A method and system for certifying a low-carbon product using slaughter traceability information is disclosed. The method can be performed in a system for performing certification for a livestock product of a target subject, including obtaining reference carbon emission information which is information related to the average daily carbon emission of a reference group, by using slaughter traceability information of the reference group which is a group of the same livestock type of subjects as the target subject; deriving target carbon emission information which is information related to the amount of carbon emission per weight of the target subject, by using the slaughter traceability information of the target subject and the reference carbon emission information obtained in advance; and certifying the livestock product of the target subject as a low-carbon certified livestock product, when the value of the target carbon emission information decreases below a reference value.

[FIG. 3]

```
┌─────────────────────────┐
│ Obtain reference carbon │
│ emission information by  │
│ using                    │── S201
│ the slaughter traceability│
│ information of reference │
│ group                    │
└─────────────────────────┘
            │
            ▼
┌─────────────────────────┐
│ Derive target carbon     │
│ emission                 │
│ information by using      │
│ the slaughter traceability│── S202
│ information of target    │
│ subject                  │
│ and the reference         │
│ carbon emission information│
└─────────────────────────┘
            │
            ▼
┌─────────────────────────┐
│ Certify as low carbon if │
│ the                      │
│ value of the target carbon│── S203
│ emission information is   │
│ less than                │
│ reference value          │
└─────────────────────────┘
```

**Description**

[Technical Field]

The present invention relates to a technique for reducing greenhouse gas, and more specifically to a method and system for certifying a low-carbon product using slaughter traceability information.

[Background Art]

Greenhouse gas emissions, which are rapidly increasing along with industrial development, have a significant impact on climate change. Accordingly, countries around the world are making efforts to reduce greenhouse gas emissions. That is, by signing climate agreements, countries around the world are aiming to reduce 50% of carbon emissions by 2030.

For example, the global anthropogenic carbon emissions amount to more than 50 billion tons per year (equivalent to carbon dioxide), of which the carbon emissions of the livestock sector account for about 16.5%. In addition, the meat-related sector accounts for more than 61% of carbon emissions in the livestock sector (FAO, 2017). The reason why the share of carbon emissions in the livestock sector is large is that methane, which has a high greenhouse gas effect (about 28 times that of carbon dioxide), is generated during the intestinal fermentation, excretion and manure treatment of livestock. For example, the amount of carbon emission emitted by two cows is equivalent to that of one vehicle (FAO, 2020).

Meanwhile, the price of carbon credits is increasing every year. In particular, the global livestock sector's carbon emissions amount to about 8 billion tons per year. Reducing this by 50% can reduce carbon emissions by about 4 billion tons per year, which can contribute to the development of a low-carbon economy by reducing climate change and forming a new market for carbon credits. For example, when reducing carbon emissions by 4 billion tons in the livestock sector, as of 2021, about $200 billion (220 trillion won) of carbon credits per year will be formed, creating new jobs related to the carbon economy and building a low-carbon industrial ecosystem.

As part of an effort to reduce carbon emissions in the livestock sector, there is related art such as KR10-2014-0055882 A for reducing methane emissions of livestock through a specific feed. However, in the case of this related art, carbon emission reduction can be calculated only based on the amount of raw and subsidiary materials such as feed and the like which are input in the production process of livestock, and thus, there is a problem that it cannot be applied to all livestock in terms of technical cost.

In addition, to achieve a low-carbon livestock industry, certification is granted for low-carbon livestock products. In this case, the low-carbon certification may be granted when the actual carbon emission for each item is reduced (e.g., by 3% or more) less than the set reference carbon emission information. Meanwhile, industrial products can be compared by calculating the reference carbon emission for each item and the carbon emission of the same item produced at each production plant, and crops (rice, soybean, *etc.*) can be compared by calculating the carbon emission of the same item per unit area. However, livestock such as Korean cattle (or beef cattle) and the like have a characteristic that the produced meat weight varies according to the genetic trait of subjects, even though they are reared in the same production process on the same farm, and this difference in production efficiency causes the carbon emission per 1 kg of beef production to be different.

Accordingly, for the ideal low-carbon certification for livestock products such as beef and the like, it is possible to calculate the carbon emission per unit of beef by measuring the carbon emission of each Korean cattle subject throughout its life cycle and dividing the same by the meat weight produced during slaughter. The average carbon emission per unit of beef can be calculated using this method for Korean cattle across the entire country, and when it decreases by more than a certain amount from the average, a low-carbon certification is given.

However, it is currently possible to measure the meat weight produced during slaughter, but it is technically and costly impossible to measure the carbon emissions of all Korean cattle (or beef cattle) throughout the life cycle.

[Disclosure]

[Technical Problem]

In order to solve the problems of the prior art as described above, by calculating the amount of carbon emission for each subject using the slaughter traceability information of livestock products, it is an object of the present invention provide a technique for performing low-carbon product certification in the livestock sector based thereon.

However, the problems to be solved by the present invention are not limited to the above-mentioned problem, and other problems not mentioned can be clearly understood by those of ordinary skill in the art to which the present invention pertains from the description below.

[Technical Solution]

In order to solve the problems as above, the method according to an exemplary embodiment of the present invention is a method performed in a system for performing certification for a livestock product of a target subject, including obtaining reference carbon emission information which is information related to the average daily carbon emission of a reference group, by using slaughter traceability information of the reference group which is a group of the same livestock type of subjects as the target subject; deriving target carbon emission information which is information related to the amount of carbon emission per weight of the target subject, by using the slaughter traceability information of the target subject and the reference carbon emission information obtained in advance; and certifying the livestock product of the target subject as a low-carbon certified livestock product, when the value of the target carbon emission information decreases below a reference value.

The obtaining may include using the slaughter traceability information of the reference group respectively including the average carcass weight ($W_{1R}$) or the average meat weight ($W_{2R}$) of the reference group and the average slaughter age ($D_R$) of the reference group.

The deriving may include using the slaughter traceability information of the target subject respectively including the carcass weight ($W_{1O}$) or the meat weight ($W_{2O}$) of the target subject and the slaughter age ($D_O$) of the target subject.

The obtaining may include calculating the reference carbon emission information to have a value proportional to the average carcass weight ($W_{1R}$) or the average meat weight ($W_{2R}$) of the reference group, and inversely proportional to the average slaughter age ($D_R$) of the reference group.

The deriving may include calculating the target carbon emission information to have a value inversely proportional to the carcass weight ($W_{1O}$) or the meat weight ($W_{2O}$) of the target subject, and proportional to the slaughter age ($D_O$) of the target subject, while reflecting the value of the reference carbon emission information.

The reference value may have a value less than the value of carbon emission information per average weight of the reference group.

The reference value may have a value obtained by subtracting a specific ratio of a value for the value of the carbon emission information per average weight of the reference group from the value of the carbon emission information per average weight of the reference group.

The subjects in the reference group may be divided into n grades (where n is a natural number greater than or equal to 2) according to the quality of the livestock product, and the target subject may be determined by any one of the n grades.

The obtaining may obtain the reference carbon emission information for each grade, by dividing the subjects of the reference group into n groups to which the subjects of the same grade belong, and using slaughter traceability information of the subjects in the corresponding group for each group.

The deriving may derive the target carbon emission information, by using the slaughter traceability information of the target subject and the reference carbon emission information for the grade to which the target subject belongs.

The certifying may include applying different reference values according to the grade to which the target subject belongs.

The reference value for each grade may have a value obtained by subtracting a specific ratio of a value for the value of the carbon emission information per average weight of the corresponding group from the value of the carbon emission information per average weight of the corresponding group.

For the specific ratio, the same ratio value may be applied for each grade, or different ratio values may be applied for at least 2 grades.

The method according to an exemplary embodiment of the present invention may further include transmitting certification information on the low-carbon certified livestock product to a trading system that performs carbon credit trading based on the carbon reduction amount of the low-carbon certified livestock product.

The transmitting the certification information may include calculating the carbon reduction information of the low-carbon certified livestock product to transmit the same together with the certification information, and the trading system may perform carbon credit trading based on the carbon reduction information of the low-carbon certified livestock product and perform futures trading.

The system according to an exemplary embodiment of the present invention includes a memory for storing slaughter traceability information of a target subject and slaughter traceability information of a reference group which is a group of the same livestock type of subjects as the target subject; and a controller for processing by using the stored information,

The controller may control to obtain reference carbon emission information which is information related to the average daily carbon emission of the reference group, by using the slaughter traceability information of the reference group.

The controller may control to derive target carbon emission information which is information related to the amount of carbon emission per unit weight of the target subject, by using the slaughter traceability information of the target subject and the reference carbon emission information obtained in advance.

The controller may control to certify the livestock product of the target subject as a low-carbon certified livestock product, when the value of the target carbon emission information decreases below a reference value.

The system according to another exemplary embodiment of the present invention includes a certification system for performing certification of a livestock product of a target subject; and a trading system for performing carbon credit trading based on the carbon reduction amount of a livestock product certified in the certification system,

The certification system may obtain reference carbon emission information which is information related to the average daily carbon emission of a reference group, by using slaughter traceability information of the reference group which is a group of the same livestock type of subjects as the target subject, derive target carbon emission information which is information related to the amount of carbon emission per unit weight of the target subject, by using slaughter traceability information of the target subject and the reference carbon emission information obtained in advance, and certify the livestock product of the target subject as a low-carbon certified livestock product, when the value of the target carbon emission information decreases below a reference value.

[Advantageous Effects]

The present invention configured as described above provides a technique for granting certification to low-carbon products (livestock products) based on the calculation of the amount of carbon emission for each subject using slaughter traceability information, and thus, there is an advantage that it is possible to implement greenhouse gas reduction in the livestock sector.

That is, the present invention can provide environmental economic value through calculation of carbon emissions and low-carbon certification only with slaughter traceability information. Accordingly, the present invention has an advantage of contributing to the achievement of the global carbon emission reduction target by providing a low-carbon business model that accelerates the selection of excellent breeders and livestock to respond to climate change, establishing national and social policies and systems and contributing to carbon emission trading in the livestock sector.

Meanwhile, OECD countries such as the United States, Europe and the like, including Korea, manage slaughter traceability information at the national level for safe livestock production, and thus, it is easy to secure big data of slaughter traceability information for application to the present invention. In the case of developing countries, the slaughter traceability system is expanding, and the operation cost of the traceability system is low (10 to 20 dollars/animal), and it is possible to finance the investment through the sale of carbon credits. Therefore, the present invention has an advantage that both developed and developing countries can be technically and costly applicable to low-carbon certification in all meat production fields including beef.

However, the effects obtainable in the present invention are not limited to the above-mentioned effects, and other effects not mentioned will be clearly understood by those of ordinary skill in the art to which the present invention pertains from the following description.

[Description of Drawings]

FIG. 1 shows a block configurational diagram of a certification system 100 according to an exemplary embodiment of the present invention.

FIG. 2 shows a flowchart of a certification method according to an exemplary embodiment of the present invention.

FIG. 3 shows a flowchart for the first exemplary embodiment of the carbon emission calculation and certification methods for the actual livestock products of a target subject.

FIG. 4 shows an example of setting the certification section according to the reduction reference ratio (r) in the case where the value of the average carbon emission per weight (D) of the carcass weight of a reference group (target livestock type) is applied as 1.

FIG. 5 shows a flowchart for the second exemplary embodiment of the carbon emission calculation and certification methods for the actual livestock products of a target subject.

FIG. 6 shows an example of setting the certification standards for low-carbon beef according to the quality (meat quality) grade of beef calculated according to the second exemplary embodiment.

FIG. 7 shows an example applied to FIG. 6 based on the slaughter traceability information for the actually slaughtered Korean cattle.

FIG. 8 shows a block configurational diagram of a comprehensive system 1 according to an exemplary embodiment of the present invention.

FIGS. 9 and 10 show various examples of electronic devices connecting to the comprehensive system 1 according to an exemplary embodiment of the present invention.

[Modes of the Invention]

The above objects and means of the present invention and the effects thereof will become clearer through the following detailed description in relation to the accompanying drawings, and accordingly, those of ordinary skill in the art to which the present invention pertains can easily practice the technical idea of the present invention. In addition, in the description of the present invention, if it is determined that a detailed description of the known technology related to the present invention may unnecessarily obscure the gist of the present invention, the detailed description thereof will be omitted.

Unless otherwise defined, all terms used herein may be used with meanings commonly understood by those of ordinary skill in the art to which the present invention pertains. In addition, terms defined in a commonly used dictionary are not to be interpreted ideally or excessively unless specifically defined explicitly.

Hereinafter, a preferred exemplary embodiment according to the present invention will be described in detail with reference to the accompanying drawings.

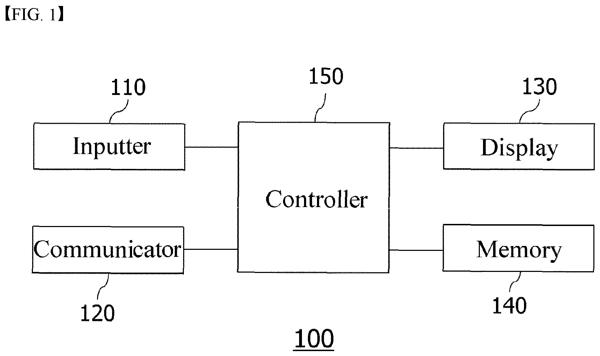

FIG. 1 shows a block configurational diagram of a certification system 100 according to an exemplary embodiment of the present invention.

In the conventional case of the livestock sector, the meat weight produced during slaughter may be measured, but it is technically and costly impossible to measure the carbon emissions of the entire life cycle of livestock such as Korean cattle (or beef cattle). Due to these difficulties, instead of measuring carbon emissions for each subject, each country measures the carbon emissions of a sample group, calculates the average carbon emission coefficient according to the age (or weight) of beef cattle, and then multiplies the same by the number of breeding heads by age to calculate the carbon emissions that occur in the beef production sector at the national or regional level. The FAO divides the equivalent amount of carbon emission from beef cattle estimated by each country by beef production (based on carcass weight), and announces the beef carbon emission amount every year as shown in Table 1.

As of 2017, the carbon emission per 1 kg of beef in Korea is announced as 17.6 $CO_2$eq/kg (based on carcass weight), and it may be calculated as 28.3 $CO_2$eq/kg (based on meat) when calculating the average Korean beef meat ratio (62%) compared to carcass weight. The global average carbon emission per 1 kg of beef is 41.4 $CO_2$eq/kg (hereinafter, $CO_2$eq/kg is omitted), and by continent, the carbon footprint of beef is high in the order of Africa, America, Asia, Oceania and Europe. By country, the carbon footprint of beef is high in the order of Ethiopia 228.2, India 174.7, Brazil 55.8, Vietnam, 41.1, France 32.4, Korea 28.3, UK 26.5, US 19.2 and Netherlands 15.8. That is, the carbon footprint of beef in developing countries such as Africa, India, Brazil, Vietnam and the like is higher than in developed countries such as the Netherlands, the United States, the United Kingdom, Korea, France and the like.

That is, in the conventional case, information on the average carbon emission of beef by country could be known as described above, but it was not possible to know the amount of carbon emission for each subject required for certification for subjects. Accordingly, the situation is that the worldwide applicable certification method for low-carbon products of beef is currently non-existent in terms of technical cost, and the certification system 100 is proposed to solve this problem.

That is, the certification system 100 is a system applicable to the livestock sector, and by calculating the carbon emission for the livestock products of the livestock based on the livestock information of slaughtered livestock (subject), it is a system that decides whether the livestock products of the livestock are certified for low carbon. Certainly, the certification system 100 may calculate the amount of carbon reduction of certified livestock products based on the calculated carbon emission. The certification system 100 may be connected to various electronic devices and the like through various wired/wireless communication methods.

In this case, the livestock information is information on livestock, and in addition to the slaughter traceability information, it may include data disclosed by the Food and Agriculture Organization (FAO) of the United Nations.

Slaughter traceability information is information on actual livestock products (beef, pork, chicken, *etc.)* and may include slaughter information (slaughter amount, slaughter date, slaughter age, meat quality grade, *etc.)* and traceability information (livestock ID, date of birth, pedigree information, *etc.*). However, in the case of milk cows and laying hens, instead of slaughter information, actual milk and egg production information (production amount, production date, quality grade, *etc.*) may be included in the slaughter traceability information.

Among the slaughter information, the slaughter date is information on the age of the slaughtered livestock (subject) on the day of slaughter. In addition, among the slaughter information, the slaughter amount is information on the weight (body weight) of the livestock and may include a fresh weight, a carcass weight, a meat weight and the like.

That is, the fresh weight is information on the weight of livestock when the livestock is alive, and the carcass weight is weight information after slaughter, excluding inedible parts such as head, internal organs, feet, leather and the like from the fresh weight. The meat weight refers to the amount of meat that may be obtained after deboning from a carcass, and in general, the amount of carbon emission per kg of meat is referred to as the "carbon footprint" of the corresponding livestock product (meat).

Meanwhile, the carcass percentage is a percentage of the fresh weight in the carcass weight, and the meat percentage is a percentage of the carcass weight in the meat weight. For example, in the case of Korean beef, the average carcass percentage is about 56% and the average meat percentage is 62%. That is, the meat weight may be obtained by calculating the meat weight index (meat percentage) from meat weight information (carcass weight, back fat thickness, muscle cross-sectional area, *etc.*), instead of calculating by adding up the amounts of meat after deboning for each part. As such, since meat weight information other than carcass weight needs to be measured for the meat weight, there are many countries that do not manage meat weight information at the national level, and the FAO discloses data on meat carbon emissions and the like by country based on carcass weight. Therefore, the meat weight for calculating the beef carbon footprint may be calculated by multiplying the meat percentage by the carcass weight of a subject as shown in the following Equation.

$$\text{Meat weight} = \text{Carcass weight of subject} \times \text{Meat percentage}$$

The certification system 100 includes an electronic device capable of computing, and the corresponding electronic device may operate as a server.

For example, the electronic device may be a desktop personal computer (PC), a laptop personal computer (PC), a tablet personal computer (PC), a netbook computer, a workstation, a personal digital assistant (PDA), a smartphone, a smartpad, a mobile phone or the like, but is not limited thereto.

Referring to FIG. 1, the certification system 100 may include an inputter 110, a communicator 120, a display 130, a memory 140, a controller 150 and the like.

The inputter 110 generates input data in response to various user inputs, and it may include various input means. For example, the inputter 110 may include a keyboard, a keypad, a dome switch, a touch panel, a touch key, a touch pad, and a mouse, a menu button and the like, but is not limited thereto.

The communicator 120 is a component that performs communication with another device (or system). For example, the communicator 120 may perform wireless communication such as 5th generation communication (5G), long term evolution-advanced (LTE-A), long term evolution (LTE), Bluetooth, Bluetooth low energy (BLE), near field communication (NFC), Wi-Fi communication and the like, or perform wired communication such as cable communication and the like, but is not limited thereto.

The display 130 displays various image data on a screen and may be configured as a non-light-emitting panel or a light-emitting panel. For example, the display 130 may include a liquid crystal display (LCD), a light emitting diode (LED) display, an organic light emitting diode (OLED) display, a micro-electromechanical system (MEMS) display, an electronic paper display or the like, but is not limited thereto. In addition, the display 130 may be implemented as a touch screen or the like in combination with the inputter 110.

The memory 140 stores various information necessary for the operation of the certification system 100. For example, the stored information may include livestock information, certification information, calculated livestock product carbon emissions, calculated livestock product carbon reduction, reference carbon emission information, target carbon emission information, reference values for the value of the target carbon emission information, program information related to a certification method to be described below and the like, but is not limited thereto. For example, depending on the type, the memory 140 may include a hard disk type, a magnetic media type, a compact disc read-only memory (CD-ROM), an optical media type, a magneto-optical media type, a multimedia card micro type, a flash memory type, a read-only memory type, a random access memory type or the like, but is not limited thereto. In addition, the memory 140 may be a cache, a buffer, a main memory, an auxiliary memory or a separately provided storage system depending on the purpose/location thereof, but is not limited thereto.

The controller 150 may perform various control operations of the certification system 100. That is, the controller 150 may control the execution of a certification method to be described below by using the information stored in the memory 140, and may control the operations of the remaining components of the certification system 100, that is, the inputter 110, the communicator 120, the display 130, the memory 140 and the like. For example, the controller 150 may include a processor which is hardware, a process which is software that is executed in the corresponding processor and the like, but is not limited thereto.

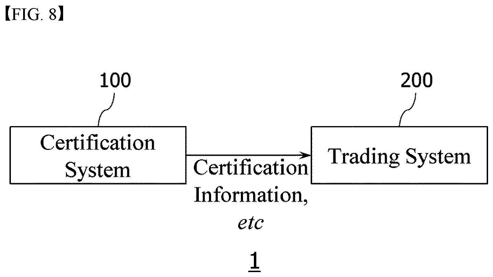

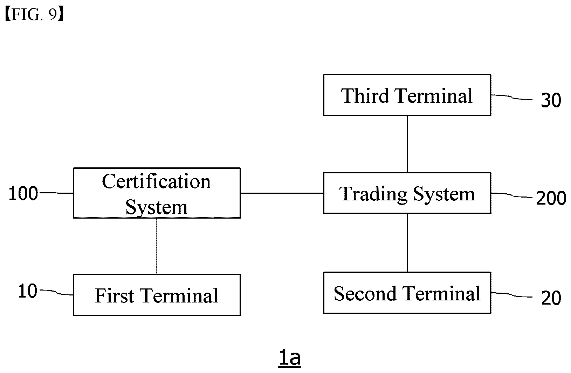

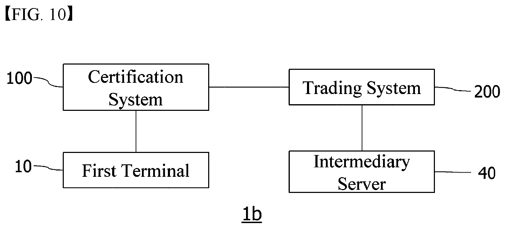

FIG. 8 shows a block configurational diagram of a comprehensive system 1 according to an exemplary embodiment of the present invention. In addition, FIGS. 9 and 10 show various examples of electronic devices connecting to the comprehensive system 1 according to an exemplary embodiment of the present invention.

That is, the comprehensive system 1 is a system applicable to the livestock sector and may include the above-described certification system 100 and a trading system 200 capable of performing carbon credit trading based on low-carbon certification, respectively.

The technology according to this comprehensive system 1 may be applied from the livestock selection stage, for example, the parent (father or mother) livestock selection stage or the breeding start stage for young livestock. Referring to FIGS. 8 to 10, the comprehensive system 1 may further include various electronic devices connected to the certification system 100 and the trading system 200, that is, terminals 10, 20 and 30, an intermediary server 40 and the like. In this case, the certification system 100 and the trading system 200 or the systems 100 and 200 and each electronic device may be connected through various wired/wireless communication methods.

Meanwhile, the first terminal 10 is a terminal used by the collector to collect livestock information through visits to livestock farms and the like, and it is accessible to the certification system 100. That is, the collector may input confirmation information on the traceability information of livestock (livestock ID, date of birth, pedigree information, *etc.*) or confirmation information (collection sample ID, *etc.*) according to the collection of the genomic sample (hair root, blood, *etc.*) of livestock and the like to the first terminal. The first terminal 10 may transmit the input information to the certification system 100.

In addition, the first terminal 10 may collect the slaughter traceability information of the low-carbon certified livestock or the slaughter traceability information of the descendants of the low-carbon certified livestock and transmit the same to the certification system 100.

However, the delivery of the slaughter traceability information may be performed through other terminals, servers or the like that store the corresponding information in addition to the first terminal 10. In addition, the slaughter traceability information may be transmitted to the certification system 100 through a portable memory and the like in which it is stored, and may be pre-stored in the memory 140 of the certification system 100.

The certification system 100 stores and manages livestock information in the memory 140 (hereinafter, referred to as a "first function"). That is, the certification system 100 may store and manage the slaughter traceability information collected/transmitted through the first terminal 10 and the like. In addition, the certification system 100 may store and manage the corresponding public data collected/delivered through a server, a portable memory or the like that stores the public data of the FAO.

Also, in addition to the first function, the certification system 100 calculates carbon emissions for livestock products of the corresponding livestock using livestock information (*i.e.,* slaughter traceability information, FAO public data, *etc.*)*,* and it decides whether to certify livestock products (hereinafter, referred to as a "second function") of the corresponding livestock according to the calculated carbon emissions. In this case, certified livestock products are referred to as "low-carbon certified livestock products."

Meanwhile, the certification system 100 may transmit certification information on the low-carbon certified livestock derived as a result of performing the second function to the trading system 200 or the like that performs carbon credit trading.

In this case, the certification system 100 may calculate the carbon emission amount (*e.g.,* the actual amount of carbon emission per unit livestock product) and carbon reduction of livestock products by using the slaughter traceability information of the livestock, and it may transmit the corresponding calculated values to the trading system 200 together with the certification information. That is, the certification system 100 transmits information about the carbon reduction amount of the livestock product and the like to the trading system 200, while certifying the corresponding livestock product as a low-carbon certified livestock product when the calculated livestock product carbon emission decreases below a reference value.

For example, the reference value may be calculated as the average value of carbon emissions of livestock produced during a specified period, such as the previous year or the previous month, or the sum of carbon emissions of all livestock in the farm, but is not limited thereto.

However, the certification system 100 may include a first server performing the first function and a second server performing the second function. In this case, the first server and the second server may be connected through wired/wireless communications. In other words, the first server performs the first function (storing and managing livestock information) according to the connection of the first terminal and the like, and transmits the stored livestock information to the second server. Afterwards, the second server performs the second function based on the transmitted livestock information and transmits result information (*i.e.,* certification information, *etc.*) of performing the second function to the trading system. In this case, the first server and the second server may respectively include an inputter 110, a communicator 120, a display 130, a memory 140, a controller 150 and the like.

Meanwhile, the trading system 200 is a system for performing carbon credit trading based on the carbon reduction amount of low-carbon certified livestock products. That is, when receiving the calculated value and the certification information for the carbon reduction amount of the low-carbon certified livestock product from the certification system 100, the trading system may perform carbon credit trading based on the carbon reduction amount of the corresponding livestock product. That is, the actual amount of carbon emissions from livestock products, which has decreased compared to the reference livestock carbon emission, may be traded in the carbon credit market.

For example, the trading system 200 may perform carbon credit trading based on the corresponding carbon reduction amount and may perform futures trading. That is, the carbon emission amount of certified livestock products, which has decreased compared to a reference value, may be futures traded in the carbon credit trading market.

Referring to FIG. 9, the second and third terminals 20 and 30 are electronic devices of the parties that access the trading system 200 and perform carbon credit trading. In this case, the second terminal 20 is a terminal used by the carbon credit seller. In other words, the seller refers to a person who sells carbon credits generated according to the carbon reduction amount of low-carbon certified livestock products. In addition, the third terminal 30 may be a terminal used by a carbon credit trader (buyer). In other words, buyers refer to those who purchase carbon credits generated according to the carbon reduction amount of low-carbon certified livestock products.

In addition to the above, the second and third terminals 20 and 30 may be terminals used by a greenhouse gas emission certification institution, or terminals used by a person who checks whether low-carbon livestock is certified/carbon reduction amount.

However, as illustrated in FIG. 10, the trading system 200 may allow carbon credit trading to be made between the second and third terminals 20 and 30 through an intermediary server 40. In this case, the trading system 200 may transmit the information received from the certification system 100 to the intermediary server 40, and the intermediary server 40 may mediate the carbon credit trading according to the operation of the above-described trading system 200 based on the corresponding information.

Meanwhile, in relation to the trading system, the concept of carbon credit trading used in the present invention is as follows.

*That is, the term 'carbon emission right' is used very commonly in Korea, but in the EU, etc., the quota (EUA) and credit (CER/ERU) are relatively clearly distinguished and the corresponding 'emission right' is not used well.*

*The Kyoto Protocol, which formed the framework for the international response system for climate change, proposes the 'Kyoto Flexible Mechanism ; a market-based mechanism, to alleviate the burden of greenhouse gas reduction activities of obligatory countries. The Kyoto Mechanism consists of Emissions Trading (ET), Clean Development Mechanism (CDM), and Joint Implementation (JI), and among these, Emissions Trading refers to the act of buying and selling carbon emission rights, which are rights to emit greenhouse gas, through the market.*

*Herein, 'carbon credit' is a concept that encompasses allowances and credits, and the quota refers to the right to emit greenhouse gases paid to major greenhouse gas emission sources such as power generation facilities, production facilities or the like as much as the total amount (cap) of greenhouse gas emission determined within the country or region, and the credit is a certificate that the greenhouse gas emission has been reduced compared to the standard forecast (BAU, BusinessAs-Usual) for an external greenhouse gas reduction project, and refers to emission rights paid to the corresponding project. Meanwhile, the meaning of the market means that the price of carbon credits is determined by the supply and demand of carbon credits in the market rather than being fixed by policy. This is a way of reflecting the environmental and social costs caused by climate change in the cost of producing goods or services, as opposed to a carbon tax, in which the size of the cost is determined by policy.*

*Certification according to the amount of carbon reduction used in the present invention is a concept corresponding to 'credit', and it is a certificate that the greenhouse gas emission has been reduced compared to the standard forecast (BAU, BusinessAs-Usual) for an external greenhouse gas reduction project, and may mean having carbon credits paid to the project.*

*The most representative credit markets are the CDM market and the JI market defined by the Kyoto Protocol. Credit in the CDM market is called Certified Emission Reduction (CER) and credit in the JI market is called Emission Reduction Unit (ERU), and all of these can partially replace quotas such as European Union Allowance (EUA) within quota markers such as EU ETS, and it is possible to reduce the cost burden of the subject of greenhouse gas reduction because the price is usually lower than that of the EUA. Currently, the issuance and transaction volume of CER through the CDM project is overwhelmingly higher than that of ERU through the JI project, and countries around the world are participating in the CDMproject. The CDM project is carried out in a format in which a country obligated to reduce in the Kyoto Protocol (Annex I country) invests and develops a greenhouse gas emission reduction project in a developing country (Non-Annex I country). After receiving official certification from an organization that has certified the greenhouse gas emission from the CDM project, carbon credits (CER) are issued according to the amount of greenhouse gas reduction.*

Hereinafter, the certification method according to an exemplary embodiment of the present invention will be described.

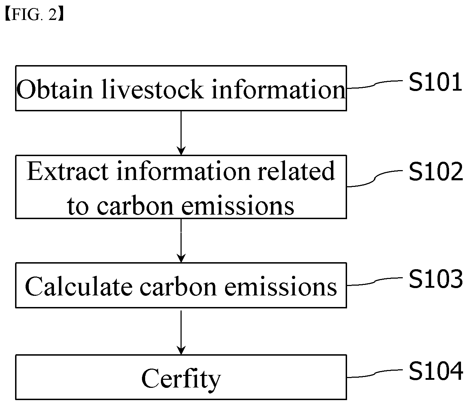

FIG. 2 shows a flowchart of a certification method according to an exemplary embodiment of the present invention.

The method according to an exemplary embodiment of the present invention is a method performed by the certification system 100, and the performance thereof may be controlled by a controller 150. That is, referring to FIG. 2, the method according to an exemplary embodiment of the present invention may include S101 to S104.

First, in S101, the controller 150 controls the certification system 100 to perform a first function. That is, the controller 150 may acquire livestock information from a first terminal and the like, and store and manage the information in a memory 140.

Afterwards, in S102, the controller 150 of the certification system 100 controls to extract slaughter traceability information related to carbon emission from the livestock information obtained in S101.

Afterwards, in S103, the controller 150 controls to calculate the carbon emission for a livestock product of a target subject (livestock) based on the information extracted in S102.

Afterwards, in S104, the controller 150 controls to certify the corresponding livestock product as a low-carbon certified livestock product when the carbon emission calculated in S103 decreases below a reference value.

Hereinafter, with respect to S103 and S104, after calculating the carbon emission for the actual livestock product of the target subject, specific exemplary embodiments of a method of certifying based on the calculated carbon emission will be described.

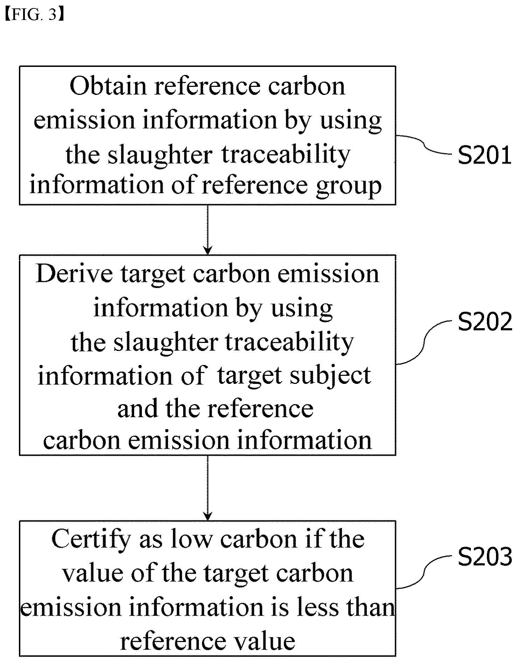

FIG. 3 shows a flowchart for the first exemplary embodiment of the carbon emission calculation and certification method for the actual livestock products of a target subject.

Referring to FIG. 3, the first exemplary embodiment for the calculation and certification of carbon emissions for the actual livestock products of the target subject includes S201 to S203, and the performance thereof may be controlled by the controller 150 of the certification system 100.

S201 is a step of obtaining reference carbon emission information, which is information related to the average daily carbon emission amount of a reference group. In this case, the reference group is a group of the same livestock type (hereinafter, referred to as "target livestock type") of subjects identical to the target subject, which is a group in which slaughter traceability information for each subject belonging to the target is stored in advance. The slaughter traceability information for this reference group may be pre-extracted as information related to carbon emissions in S101 and S102. For example, if the target subject is Korean cattle, the reference group is a group that includes Korean cattle other than the target subject, and it may be a group of Korean cattle slaughtered in the previous year and the like. In other words, information on the production area is managed at the national level by attaching a tag (bar code) to subjects such as Korean cattle and the like that are raised in Korea. These subjects go through the slaughterhouse to determine the livestock product grade, and the slaughter traceability information on the slaughter age, carcass weight, meat weight and the like is managed. Accordingly, in S201, by using the slaughter traceability information of the reference group, the reference carbon emission information of the reference group may be obtained. In this case, the slaughter traceability information of the reference group may include at least one of the average carcass weight (A) (or indicated as "$W_{1R}$") and the average meat weight (B) (or indicated as "$W_{2R}$") of the reference group, and the average slaughter age ($D_R$) of the reference population, respectively.

The average carcass weight (A) of the reference group may be calculated by using the sum of the carcass weights of slaughtered subjects in the reference group and the number of slaughtered heads (number of slaughtered subjects) according to Equation (1) below. In addition, the average meat weight (B) of the reference population may be calculated by using the sum of the meat weights for subjects in the reference group and the number of slaughtered animals according to Equation (2) below.

In this case, the total carcass weight refers to the total carcass weight of each subject within the reference group, and the total slaughtered meat weight refers to the total meat weight for each subject within the reference group. That is, the average carcass weight (A) and average meat weight (B) of the reference group may be slaughter traceability information calculated from slaughter traceability information on the carcass weight and meat weight of each subject in the reference group. In the case where the average meat percentage (C) for the target livestock type in the reference group is pre-provided (or calculated) as livestock information through FAO's public data and the like, the average meat weight (B) of the reference group may be calculated by multiplying the average meat percentage (C) by the average carcass weight (A).

(1) Average carcass weight (A) of reference group = Sum of slaughtered carcass weights ÷ Number of slaughtered heads

(2) Average meat weight (B) of reference group = Sum of slaughtered meat weights ÷ Number of slaughtered animals

(3) Average meat percentage (C) (%) of reference group (target livestock type) = B ÷ A

(4) Average carbon emission per weight (D) of carcass weight of reference group (target livestock type): Use the latest published national data from the FAO

(5) Average carbon emissions per meat weight (E) of reference group = D ÷ C = D / C

(6) Average slaughter age (F) of reference group: Average number of days of breeding from birth to slaughter

(7) Average daily carbon emission (G) of reference group = A × D ÷ F

(7') Average daily carbon emission (G) of reference group = B × E ÷ F

Meanwhile, in Equation (4), the average carbon emission per weight of the carcass weight (D) of the reference group represents the amount of carbon emission generated by carcass weight of a unit weight (*e.g.,* 1 kg) in the livestock products of the reference group. In addition, in Equation (5), the carbon emission per meat weight (D) of the reference group represents the carbon emission generated by the meat weight per unit weight (*e.g.,* 1 kg) in the livestock products of the reference group. The average carbon emission per weight (D) or the average carbon emission per meat weight of the carcass weight (E) of the reference group may be referred to as "carbon emission information per weight of the reference group."

In this case, the carbon emission information per weight of the reference group may be extracted from the FAO's public data on livestock products of the same livestock type as the target subject (*i.e.,* the same livestock type as the reference group). However, if the average carbon emission per weight of carcass weight (D) is not in the FAO public data, the average carbon emission per weight of carcass weight (D) may also be calculated by multiplying the average carbon emission per meat weight (E) by the average meat percentage (C) according to Equation (5).

For example, Table 1 below is an example of FAO's public data, and shows the number of breeding cattle, beef production, average carbon emission per weight of carcass weight and carbon emission per meat weight published by continent and country.

[Table 1]

| By Continent | Number of Breeding Cattle (1,000 Heads) | Beef Production (1,000 Tons) | Reference Carbon Emissions by Carcass Weight ($CO_2$eq/kg) | Reference Carbon Emissions by Meat Weight ($CO_2$eq/kg) |
|---|---|---|---|---|
| World | 1,511,021 | 67,354 | 25.5 | 41.1 |
| Africa | 361,282 | 6,700 | 47.8 | 77.1 |
| America | 527,009 | 32,460 | 25.2 | 40.6 |
| Asia | 470,014 | 14,664 | 24.5 | 39.5 |
| Europe | 117,256 | 10,618 | 14.9 | 24 |
| Oceania | 35,458 | 2,912 | 22.8 | 36.8 |
| Brazil | 214,659 | 10,200 | 34.6 | 55.8 |
| India | 193,462 | 904 | 108.3 | 174.7 |
| US | 94,804 | 12,349 | 11.9 | 19.2 |
| China | 63,542 | 5,942 | 15.8 | 25.5 |
| Ethiopia | 63,284 | 392 | 141.5 | 228.2 |

(continued)

| By Continent | Number of Breeding Cattle (1,000 Heads) | Beef Production (1,000 Tons) | Reference Carbon Emissions by Carcass Weight ($CO_2$eq/kg) | Reference Carbon Emissions by Meat Weight ($CO_2$eq/kg) |
|---|---|---|---|---|
| France | 18,150 | 1,428 | 20.1 | 32.4 |
| UK | 9,738 | 914 | 16.4 | 26.5 |
| Vietnam | 6,060 | 334 | 25.5 | 41.1 |
| Netherlands | 3,721 | 424 | 9.8 | 15.8 |
| Korea | 3,645 | 286 | 17.6 | 28.3 |

Referring to Equation (1) to Equation (7'), in S201, by using the slaughter traceability information of the reference group respectively including the average carcass weight (A) or average meat weight (B) of the reference group and the average slaughter age (F) (or indicated as "$D_R$") of the reference group, and the FAO's carbon emission information per weight on livestock products of the same livestock type as the target subject, the reference carbon emission information may be calculated. In particular, in S201, the average daily carbon emission (G), which is the reference carbon emission information derived according to Equations (7) and (7'), represents the amount of carbon emission generated per day per a unit subject in the reference group. That is, the average daily carbon emission (G) represents the amount of carbon emission generated in one day by one subject with an average carbon emission in the reference group. This reference carbon emission information is used to derive the carbon emission information of the target subject in S202, which will be described below. In this case, due to rapid growth, as a subject rapidly reaches a certain carcass weight or meat weight more quickly, the shorter the slaughter age, the lower the carbon emission of the corresponding subject. In addition, as the livestock product of a subject has more carcass weight or meat weight at a certain slaughter age, the carbon emission of the corresponding subject is reduced.

In order to reflect this point, in S201, the average carcass weight (A) or the average meat weight (B) of the reference group is used, and the reference carbon emission information is calculated using the average slaughter age (F) of the reference group. That is, in S201, the calculation is performed for the reference carbon emission information according to Equation (7) or Equation (7') such that the reference carbon emission information may have a value proportional to the average carcass weight (A) or average meat weight (B) of the reference group, and inversely proportional to the average slaughter age ($D_R$) of the reference group.

Afterwards, S202 is a step of deriving target carbon emission information, which is information related to the amount of carbon emission per weight of the target subject, by using the slaughter traceability information of the target subject and the reference carbon emission information obtained in S201, respectively. In this case, the slaughter traceability information for the target subject may be pre-extracted as information related to carbon emissions in S101 and S102.

In this case, the slaughter traceability information of the target subject may include at least one of the carcass weight (I) (also indicated as "$W_{1O}$") and the meat weight (J) (also indicated as "$W_{2O}$") of the target subject, and the slaughter age (H) of the target entity (also indicated as "$D_O$"), respectively

However, the meat weight (J) of the target subject may be extracted from the slaughter traceability information of the target subject or calculated by using the carcass weight (I) of the target subject and the average meat percentage (C) of the target livestock type according to Equation (8) below.

$$(8) \text{ Meat weight (J) of target subject} = \text{Carcass weight (I)} \times \text{Average meat}$$

$$\text{percentage (C) in reference group}$$

$$(9) \text{ Carbon emission per weight of carcass weight (K) of target subject} = D \times$$

$$(H \div I) \times (A \div F)$$

$$(9') \text{ Carbon emission per weight of carcass weight (K) of target subject} = D \times$$

$$(H / F) \times (A / I)$$

$$(9'') \text{ Carbon emission per weight of carcass weight (K) of target subject} = G \times H \div I$$

$$(10) \text{ Carbon emission per meat weight (L) of target subject} = E \times (H \div J) \times (B \div F)$$

$$(10') \text{ Carbon emission per meat weight (L) of target subject} = E \times (H / F) \times (B / J)$$

$$(10'') \text{ Carbon emission per meat weight (L) of target subject} = G \times (H \div J)$$

In Equation (9), the amount of carbon emission per weight of the carcass weight (K) of the target subject represents the amount of carbon emission generated by a unit weight (e.g., 1 kg) of the carcass weight in the livestock product of the target subject. In addition, in Equation (10), the amount of carbon emission per meat weight (L) of the target subject represents the amount of carbon emission generated by a unit weight (*e.g.,* 1 kg) of the meat weight in the livestock product of the target subject. The average carbon emission per weight of the carcass weight (K) or carbon emission per meat weight (L) of the target subject is carbon emission information per weight of the target subject, and it corresponds to the target carbon emission information.

In particular, as the slaughter age of the target subject is shorter compared to the average subject of the reference group due to the rapid growth of the target subject, the carbon emission of the target subject will decrease. In addition, as the livestock product of the target subject has more carcass or meat weight than the average subject of the reference group, the carbon emission of the target subject is reduced. In order to reflect this point, in S202, the slaughter age (H) of the target subject, the carcass weight (I) or the meat weight (J) of the target subject, and the average carcass weight (A) or average meat weight (B) of the reference group and the average slaughter age (F) of the reference group are respectively used to calculate the target carbon emission information.

That is, in S202, the calculation is performed on the target carbon emission information according to Equations (9) to (9") or Equations (10) to (10") such that the target carbon emission information has a value which is proportional to the average carbon emission per weight (D) of the carcass weight or the average carbon emission per meat weight (E) of the reference group, proportional to the slaughter age (H) of the target subject, inversely proportional to the carcass weight (I) or the meat weight (J) of the target subject, proportional to the average carcass weight (A) or the average meat weight (B) of the reference group, and inversely proportional to the average slaughter age (F) of the reference group.

In addition, the carbon emission amount of the target subject may be derived by comparing the target subject with the average subject of the reference group. That is, in S202, the calculation is performed for the target carbon emission information according to Equation (9') or Equation (10') such that while reflecting A/I, which is the ratio of the average carcass weight (A) of the reference group with respect to the carcass weight (I) of the target subject, or reflecting B/J, which is the ratio of the average meat weight (B) of the reference group with respect to the target subject meat weight (J), the target carbon emission information has a value which reflects H/F which is the ratio of the slaughter age (H) of the target subject with respect to the average slaughter age (F) of the reference group. Specifically, the target carbon emission information may be calculated to have a value proportional to H/F while being proportional to A/I or B/J.

In particular, referring to Equation (7), (D × A ÷ F), which is obtained by dividing the product (D × A) of the average carbon emissions per weight of the carcass weight (D) of the reference group and the average carcass weight (A) of the reference group (D × A) by the average slaughter age (F) of the reference group, and (E × A ÷ F), which is obtained by dividing the product (E × A) of the average carbon emission per meat weight (E) of the reference group and the average carcass weight (A) of the reference group by the average slaughter age (F) of the reference group correspond to the average daily carbon emission (G) of the reference group, respectively. By using the average daily carbon emission (G) of this reference group, Equations (9) and (10) may be converted into Equations (9") and (10"), respectively.

Accordingly, if the converted Equation (9") or (10") is used, in S202, the target carbon emission information may be calculated such that while reflecting the average daily carbon emission (G) of the reference group, which is the reference carbon emission information, the target carbon emission information has a value inversely proportional to the carcass weight (I) or meat weight (J) of the target subject, and is proportional to the slaughter age (H) of the target subject.

As a result, the target carbon emission information may have a value proportional to the value of the reference carbon emission information, and may have a value inversely proportional to the carcass weight (I) or the meat weight (J) of the target subject, and it may have a value proportional to the slaughter age ($D_O$) of the target subject.

Afterwards, S203 is a step of certifying the target subject's livestock product as a low-carbon certified livestock product, when the value of the target carbon emission information decreases below a reference value.

Meanwhile, the average carbon emission per weight of the carcass weight (D) of the reference group used in Equations (7), (9) and (10) corresponds to a coefficient multiplied by a variable. Accordingly, as the value of the coefficient D changes, the amount of carbon footprint of the subjects of the reference group and the target subject changes, but the ratio of the target subject's carbon emission with respect to the average subject's carbon emission of the reference group, and the ratio of carbon emissions between multiple target subjects are unchanged. Therefore, the present invention may set a low-carbon certification range using only the slaughter traceability information of the reference group and the slaughter traceability information of the target subject, even without calculated or measured values for the coefficient D in the equations related to the carbon emissions for the subjects in the reference group and the target subjects. In this case, in Equations (7), (9), and (10), when 1 is applied to the value of D, a value for the corresponding ratio may be calculated. Afterwards, S203 is a step of certifying the target subject's livestock product as a low-carbon certified livestock product, when the value of the target carbon emission information decreases below a reference value.

In this case, the reference value R has a value less than the value of the carbon emission information per weight of the reference group (target livestock type). That is, in S203, only when the average carbon emission per weight of the carcass weight (K) of the target subject is reduced by a certain value or more compared to the average carbon emission per weight of the carcass weight (D) of the reference group (target livestock type), the livestock product of the corresponding target subject is granted a low-carbon certification. Alternatively, in S203, only when the average carbon emissions per meat weight (L) of the target subject is reduced by a certain value or more compared to the average carbon emissions (E) per meat weight of the reference group (target livestock type), the livestock product of the corresponding target subject is granted a low-carbon certification. Certainly, in S203, a preset value or a changed value may be applied to the reduction reference ratio (r).

Specifically, according to Equations (11) and (11'), the reference value (R) may have a value which is obtained by subtracting a value equal to a specific ratio (r) (hereinafter, referred to as a "reduction reference ratio") with respect to the value of the carbon emission information per weight of the reference group (target livestock type) from the value of the carbon emission information per weight of the reference group. In other words, the reference value (R) may be a value (D - D × r) obtained by subtracting a value (D × r) equal to the reduction reference ratio of the average carbon emission per weight (D) of the carcass weight from the average carbon emission per weight (D) of the carcass weight as shown in Equation (11). Alternatively, the reference value (R) may be a value (E - E × r) which is obtained by subtracting a value (E × r) equal to the reduction reference ratio of the average carbon emission per meat weight (E) from the average carbon emission per meat weight (E) as shown in Equation (12).

$$(11)\ \text{Reference value (R)} = D - (D \times r)$$

$$(11')\ \text{Reference value (R)} = E - (E \times r)$$

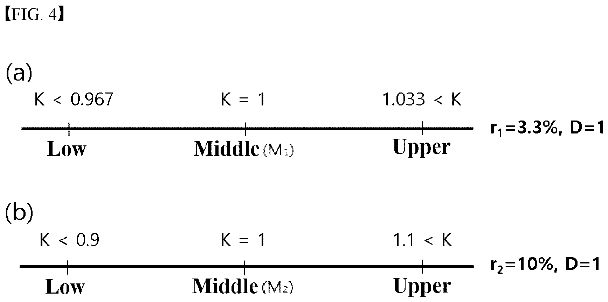

For example, if the average carbon emission per weight of the carcass weight (D) of the reference group (target livestock type) is set to 17.6 and the reduction reference ratio is set to 3.3%, the reference value (R) has a value of 17.0192, which is the result of 17.6 - (17.6 × 3.3%). In this case, livestock products of target subjects whose average carbon emissions per weight of the carcass weight (K) is less than 17.0192 may be certified as low-carbon certified livestock products. FIG. 4 shows an example of setting the certification section according to the reduction reference ratio (r) in the case where the value of the average carbon emission per weight (D) of the carcass weight of a reference group (target livestock type) is applied as 1.

Referring to FIG. 4(a), the value of the average carbon emission per weight of the carcass weight (D) of the reference group (target livestock type) may be applied as 1, and the reduction reference ratio ($r_1$) may be set to 3.3%. In this case, the value (D × $r_1$) by the reduction reference ratio is 0.033. Accordingly, when the value of the average carbon emission per weight of the carcass weight (K) of the subject is smaller than the reference value (R) of D - (D × $r_1$) of 0.967 (K < 0.967), low carbon certification may be granted. In addition, referring to FIG. 4(b), the value of the average carbon emission per weight of the carcass weight (D) of the reference group (target livestock type) may be applied as 1, and the reduction reference ratio (r1) may be set to 10%. In this case, the value (D × $r_2$) by the reduction reference ratio is 0.1. Accordingly, when the value of the average carbon emission per weight of the carcass weight (K) of the target subject is smaller than the reference value (R) of D - (D × $r_2$) of 0.9 (K < 0.9), low-carbon certification may be granted.

The specific value of the reduction reference ratio (r) or the reference value (R) may be subdivided and applied according to national policies, market conditions and the like. In addition, by applying D as 1, the value of the target carbon emission information may be obtained as a ratio, and by multiplying the value of the target carbon emission information calculated as a percentage by the country-specific coefficient (D) according to the FAO's public data, the specific beef carbon footprint for the target subject may be obtained. In other words, the FAO announces the average carbon emissions for each type of livestock products such as beef by country and continent every year, and by using the same, it is easier to provide a technique for the implementation of the low-carbon certification system for all livestock products such as beef and the like in countries around the world.

Accordingly, since the present invention may solve the conventional problems in which the measurement and calculation of carbon emissions for a target subj ect were difficult in terms of technical cost, it has the advantage of promoting the activation of low-carbon certification systems and carbon reduction technologies for livestock products such as beef and the like, which may be used worldwide.

Meanwhile, all domestically delivered cattle are slaughtered through slaughterhouses, and livestock products of slaughtered cattle are graded for their quality (meat quality), and these livestock grades are stored and managed as slaughter traceability information. Meat weight information for grading each subject is carcass weight, back fat thickness and sirloin cross-section, and meat quality information is intramuscular fat (levels 1-9) and the like. This information is delivered to the producer around 2 days after slaughter (online or offline), all livestock products are distributed in subject units, and the final consumer may check the traceability of the corresponding beef while the subject identification code is recorded on the packaging.

Therefore, the certification method according to the present invention may certify by linking with the meat grade information in a subject unit. The linkage between the certification information management platform and the traceability management platform may maximize the effectiveness of the low-carbon certification system. In particular, in the case of countries that implement a beef grading system such as Korea and the like, the quality and price are distributed in the market differently depending on the grade, and thus, judging the low-carbon certification for each grade may be effective in establishing the low-carbon beef certification system in the market. By reflecting this point, the second exemplary embodiment relates to a low-carbon certification technique according to the grade of livestock products.

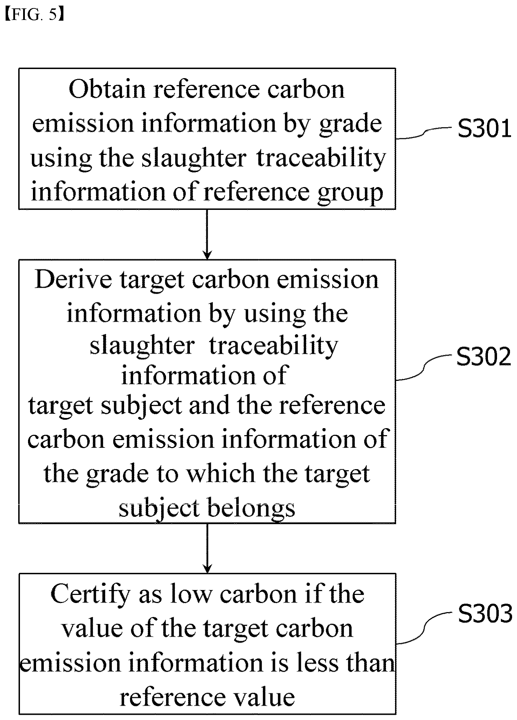

FIG. 5 shows a flowchart for the second exemplary embodiment of calculation and certification methods for actual livestock products of a target subject.

Referring to FIG. 5, the second exemplary embodiment for the calculation and certification of carbon emissions for the actual livestock products of the target subject includes S301 to S303, the performance of which may be controlled by the controller 150 of the certification system 100.

This second exemplary embodiment is basically the same as the technical content used in the first exemplary embodiment described above. Accordingly, the second exemplary embodiment may equally use the various Equations described above. However, in the second exemplary embodiment, the target livestock type of livestock products to which the reference group and the target subject belong are divided into various grades (*e.g.,* meat quality grade, *etc.*) according to the meat quality, and accordingly, the only difference is that the reference carbon emission information and the target carbon emission information are calculated according to the grades thereof.

That is, the subjects of the reference group are divided into n meat quality grades (n is a natural number greater than or equal to 2) according to the quality of the livestock product. Certainly, the target subject is also determined to be any one of the n grades. Hereinafter, these differences will be mainly described, and the same parts as those of the first exemplary embodiment will be omitted.

First, S301 is a step of obtaining the reference carbon emission information of the reference group within the grade by grade using the slaughter traceability information of the reference group. That is, it is divided into n groups (1st group to $n^{th}$ group) to which the same grade of subjects belongs among the subjects of the reference group, and for each group, the reference carbon emission information for each grade (*i.e.*, each group) is obtained by using the slaughter traceability information for the subjects in the corresponding group.

Specifically, by using all subjects of the reference group, the reference carbon emission information of the reference group according to S201 is obtained. That is, according to Equations (1) to (7') and the like, the above-described contents in S201 may be applied.

Next, among the subjects of the reference group, the subjects whose quality corresponds to the first grade are classified into the first group. In this case, by using the slaughter traceability information of the first subjects, which are subjects of the reference group belonging to the first group, for each first subject, carbon emission information per weight (first target carbon emission information) is derived according to the above-described contents in S202 according to Equations (8) to (10') and the like. The average value of the derived first target carbon emission information is extracted as the carbon emission information per average weight for the first grade ($D_1$). By applying the extracted carbon emission information per average weight ($D_1$) for the first grade to the above-described content in S201 according to Equations (4) to (7') and the like, the first reference carbon emission information, which is information related to the average daily carbon emission for the first grade, may be obtained.

Similarly, in this way, the reference carbon emission information for the corresponding grade is obtained for the remaining groups as well. That is, by using the slaughter traceability information of the $k^{th}$ subjects, which are the subjects of the reference group belonging to the $k^{th}$ group (where k is a natural number between 2 and n), carbon emission information per weight ($k^{th}$ target carbon emission information) is derived according to the content described in S202 in accordance with Equations (8) to (10") for each $k^{th}$ subject and the like. The average value of the derived $k^{th}$ target carbon emission information is extracted as the carbon emission information per average weight ($D_k$) for the $k^{th}$ grade. By applying the extracted carbon emission information per average weight ($D_k$) for the $k^{th}$ grade to the above-described content in S201 according to Equations (4) to (7') and the like, it is possible to obtain the $k^{th}$ reference carbon emission information, which is information related to the daily average carbon emission, for the $k^{th}$ grade.

Afterwards, S302 is a step of deriving target carbon emission information, by using the slaughter traceability information of the target subject and the reference carbon emission information for the grade to which the target subject belongs among the reference carbon emission information for each grade obtained in S301. That is, according to Equations (8) to (10") and the like, the above-described content in S202 may be applied.

For example, if the target subject belongs to the $k^{th}$ grade, by using the slaughter traceability information of the target subject and the $k^{th}$ reference carbon emission information obtained in S301, according to the above-described contents according to Equations (8) to (10") and the like, target carbon emission information of the target subject may be derived.

Afterwards, S303 is a step of certifying the target subject's livestock product as a low-carbon certified livestock product when the value of the target carbon emission information decreases below the reference value of the grade to which the target subject belongs. In this case, different reference values may be applied for each grade. This is because even if the same reduction reference ratio (R) is applied for each grade, the value of the carbon emission information per average weight (D) of the reference group belonging to each grade is different. Accordingly, in S303, different reference values may be applied according to the grade to which the target subject belongs.

That is, the k-1$^{th}$ reference value ($R_{k-1}$), which is the reference value for the k-1$^{th}$ grade, may be different from the $k^{th}$ reference value ($R_k$), which is the reference value for the $k^{th}$ grade. However, the present invention is not limited thereto, and different reference values may be applied to at least two meat quality grades among the n meat quality grades.

Meanwhile, in general, the higher the grade (*i.e.*, as increasing to the first grade), the smaller the value of the carbon emission information per average weight (D or E) of the reference group belonging to the corresponding grade. That is, the value of the carbon emission information per average weight of the k-1$^{th}$ subjects ($D_{k1}$ or $E_{k1}$) belonging to the k-1$^{th}$ grade is less than the carbon emission information per average weight of the $k^{th}$ subjects ($D_k$ or $E_k$) belonging to the $k^{th}$ grade. Accordingly, the k-1$^{th}$ reference value ($R_{k1}$) of the k-1$^{th}$ grade may have a smaller reference value than the $k^{th}$ reference value ($R_k$) of the $k^{th}$ grade.

Specifically, according to the content of S203 described above according to Equations (11) and (11'), the reference value for each grade may have a value (D - D $\times$ r or E - E $\times$ r), which is obtained by subtracting the value (D $\times$ r or E $\times$ r) equal to the reduction reference ratio (r) for the value of the carbon emission information (D or E) per weight of the corresponding group (grade) from the value of the carbon emission amount information (D or E) per average weight of the corresponding group (grade).

That is, the reference value ($R_i$) for the $i^{th}$ grade (where i is a natural number less than n) may have a value ($D_i$ - $D_i \times r_i$ or $E_i$ - $E_i \times r_i$), which is obtained by subtracting the value ($D_i \times r_i$ or $E_i \times r_i$) equal to the reduction reference ratio ($r_i$) for the value of carbon emission information ($D_i$ or $E_i$) per weight from the value of the carbon emission information ($D_i$ or $E_i$) per average weight of the $i^{th}$ group (grade).

However, various values may be applied for the reduction reference ratio ($r_i$) depending on national policies, market conditions and the like. For example, the same ratio value for each grade may be applied for the reduction reference ratio ($r_i$) is, or different ratio values may be applied for each grade, or different ratio values may be applied for at least two grades.

Meanwhile, unlike the above, in S301, reference carbon emission information may be obtained only for the grade to which the target subject belongs. In this case, there is an advantage that it is not necessary to calculate the reference carbon emission information for other grades.

<Example of setting low-carbon beef certification standards based on beef grade system>

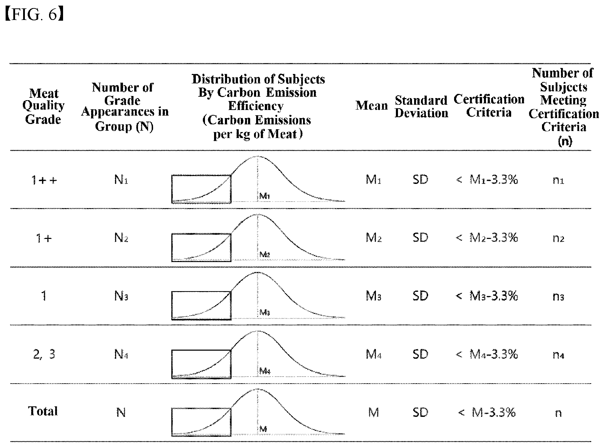

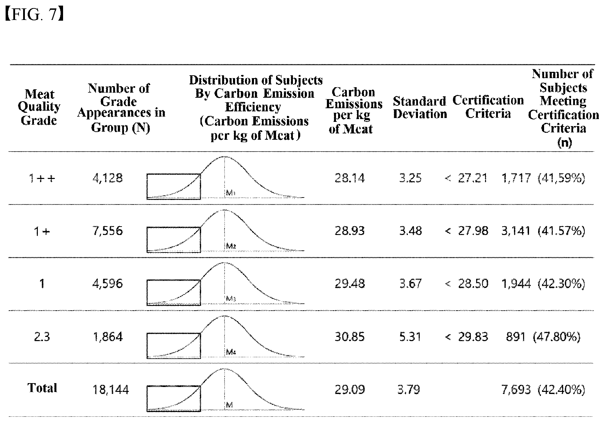

FIG. 6 shows an example of setting the certification standards for low-carbon beef according to the quality (meat quality) grade of beef calculated according to the second exemplary embodiment, and FIG. 7 shows an example applied to FIG. 6 based on the slaughter traceability information for the actual slaughtered Korean cattle.

That is, as illustrated in FIGS. 6 and 7, for beef, a livestock product of cattle, which is the target livestock type, grades are divided into five grades, and reference carbon emission information for each grade may be obtained for each grade.

In particular, the actual data applied based on slaughter traceability information, including livestock product grading information, of a sample group of 18,144 heads of Korean cattle (Korean beef steer) slaughtered between 2017 and 2019 are as follows, and the contents derived based on such actual data are illustrated in FIG. 7.

(1) Average carcass weight (A) of Korean cattle group = 448 kg

(2) Average meat weight (B) of Korean cattle group = 277.8 kg

(3) Average meat percentage (C) of Korean cattle group = 62%

(4) Average carbon emission per weight (per kg) of the average carcass weight (D) of the Korean cattle group: 17.5714 (FAO latest Korean data)

(5) Average carbon emission per meat weight (per kg) (E) of Korean cattle group = $17.5714 \div 62\% = 28.3409$

(6) Average slaughter age (F) of Korean cattle group: 900 days (30 months)

(7) Average daily carbon emission (G) of Korean cattle group = $17.5714 \times 448$ kg $\div 900$ days $= 8.7466$

- Slaughter age (H) of Korean cattle subjects: Grade of livestock products in 2017-2019 (18,144 heads)
- Carcass weight (I) of Korean cattle subjects: Grade of livestock products in 2017-2019 (18,144 heads)

(8) Meat weight (J) of Korean cattle subjects: Grade of livestock products in 2017-2019 (18,144 heads)

(9) Carbon emission per weight (per kg) of carcass weight (K) per Korean cattle subject = $17.5714 \times (H \div I) \times (448$ kg $\div 900$ days$)$

(9') Carbon emission per weight (per kg) of carcass weight (K) per Korean cattle subject = $17.5714 \times (H/900$ days$) \times (448$ kg$/I)$

(9") Carbon emission per weight (per kg) of carcass weight per Korean cattle subject (K) = $8.7466 \times (H \div I)$

(10) Carbon emission per meat weight (per kg) per Korean cattle subject (L) = $28.3409 \times (H \div J) \times (277.8$ kg $\div 900$ days$)$

$$\text{(10') Carbon emission per meat weight (per kg) per Korean cattle subject (L)}$$

$$= 28.3409 \times (H/900 \text{ days}) \times (277.8 \text{ kg/J})$$

$$\text{(10'') Carbon emission per meat weight (per kg) per Korean cattle subject (L)}$$

$$= 8.7466 \times (H \div J)$$

- Certification criteria: Values below the reduction reference ratio (3.3%) compared to the average (M) of carbon emissions per carcass weight or meat weight (per kg) of Korean cattle subjects in each grade
- The number of heads meeting the certification standards (N) = The number of Korean cattle subjects that meet the certification standards in each grade

That is, in the case of Korean beef 1++ grade, the average carbon emission per meat weight (per kg) is 28.14, and thus, 27.21 (28.14 - 28.14 × 3.3%), which is reduced by 3.3%, is the low-carbon certification standard. Accordingly, a Korean cattle subject having a value of target carbon emission information less than 27.21 may be designated as a low-carbon certified subject.

Also, in the case of Korean beef 1 grade, the average carbon emission per meat weight (per kg) is 29.48, and thus, 28.50 (29.48 - 29.48 × 3.3%), which is reduced by 3.3%, is the low-carbon certification standard. Accordingly, a Korean cattle subject having a value of target carbon emission information less than 28.50 may be designated as a low-carbon certified subject. The same method as described above may be applied to other Korean beef grades as well. As such, the reason that the higher the grade of Korean beef, the lower the average carbon emission by meat weight (per kg) is because the improvement of Korean beef was promoted in the direction of increasing the quality and quantity of meat.

Meanwhile, after S104, the trading system 200 may control the carbon credit trading to be made based on the carbon reduction amount of the low-carbon certified livestock product. That is, the controller 150 controls such that the calculated carbon reduction amount (or carbon emission amount) and certification information for the corresponding livestock are transmitted from the certification system 100 to the trading system 200 through the communicator 120. Accordingly, the trading system 200 receives and stores the carbon reduction amount (or carbon emission amount) and certification information, and the carbon emission trading between the second and third terminals 20 and 30 may be controlled based on the carbon reduction amount (or carbon emission amount). Certainly, the trading system may transmit the corresponding information to the intermediary server 40 and the like such that that carbon credits are traded by the mediation of the intermediary server 40.

However, the above-described method may include detailed operations of the above-described systems 1, 100 and 200. However, since the detailed operations have already been described above, these will be omitted below.

As described above, the present invention proposes a technique that can specifically derive carbon emissions for livestock products of the corresponding livestock based on the slaughter traceability information of the slaughtered livestock. Accordingly, since the present invention provides a technique for granting certification for low-carbon products (livestock products) based on the calculation of carbon emissions for subjects using livestock traceability information, it has an advantage in implementing greenhouse gas reduction in the livestock sector.

That is, the present invention may provide environmental economic value through calculation of carbon emissions and low-carbon certification only with slaughter traceability information. Accordingly, the present invention has advantages of providing a low-carbon business model that accelerates the selection of excellent breeders and livestock to respond to climate change, establishing national and social policies and systems, and contributing carbon emission trading in the livestock sector, thereby contributing to the achievement of global carbon emission reduction goals.

Meanwhile, OECD countries such as the United States, Europe and the like, including Korea, manage slaughter traceability information at the national level for safe livestock production, and thus, it is easy to secure big data of slaughter traceability information for application to the present invention. In the case of developing countries, the slaughter traceability system is expanding, and the operation cost of the traceability system is low (10 to 20 dollars/animal), and it is possible to finance the investment through the sale of carbon credits. Therefore, the present invention has an advantage that both developed and developing countries can be technically and costly applicable to low-carbon certification in all meat production fields including beef.

In the detailed description of the present invention, although specific exemplary embodiments have been described, various modifications are possible without departing from the scope of the present invention. Therefore, the scope of the present invention is not limited to the described exemplary embodiments and should be defined by the following claims and their equivalents.

[Industrial Applicability]

The present invention relates to a method and system for certifying a low-carbon product, and since it is possible to provide a method and system for certifying a low-carbon product for performing low-carbon product certification in the livestock sector based on calculating the amount of carbon emission for each subject using the slaughter traceability information of livestock products, it has industrial applicability.

**Claims**

1.  A method performed in a system for performing certification for a livestock product of a target subject, comprising:

    obtaining reference carbon emission information which is information related to the average daily carbon emission of a reference group, by using slaughter traceability information of the reference group which is a group of the same livestock type of subjects as the target subject;
    deriving target carbon emission information which is information related to the amount of carbon emission per weight of the target subject, by using the slaughter traceability information of the target subject and the reference carbon emission information obtained in advance; and
    certifying the livestock product of the target subject as a low-carbon certified livestock product, when the value of the target carbon emission information decreases below a reference value.

2.  The method of claim 1, wherein the obtaining comprises using the slaughter traceability information of the reference group respectively including the average carcass weight ($W_{1R}$) or the average meat weight ($W_{2R}$) of the reference group and the average slaughter age ($D_R$) of the reference group, and
    wherein the deriving comprises using the slaughter traceability information of the target subject respectively including the carcass weight ($W_{1O}$) or the meat weight ($W_{2O}$) of the target subject and the slaughter age ($D_O$) of the target subject.

3.  The method of claim 2, wherein the obtaining comprises calculating the reference carbon emission information to have a value proportional to the average carcass weight ($W_{1R}$) or the average meat weight ($W_{2R}$) of the reference group, and inversely proportional to the average slaughter age ($D_R$) of the reference group.

4.  The method of claim 3, wherein the deriving comprises calculating the target carbon emission information to have a value inversely proportional to the carcass weight ($W_{1O}$) or the meat weight ($W_{2O}$) of the target subject, and proportional to the slaughter age ($D_O$) of the target subject, while reflecting the value of the reference carbon emission information.

5.  The method of claim 1, wherein the reference value has a value less than the value of carbon emission information per average weight of the reference group.

6.  The method of claim 5, wherein the reference value has a value obtained by subtracting a specific ratio of a value for the value of the carbon emission information per average weight of the reference group from the value of the carbon emission information per average weight of the reference group.

7.  The method of claim 1, wherein the subjects in the reference group are divided into n grades (n is a natural number greater than or equal to 2) according to the quality of the livestock product, and the target subject is determined by any one of the n grades,

    wherein the obtaining obtains the reference carbon emission information for each grade, by dividing the subjects of the reference group into n groups to which the subjects of the same grade belong, and using slaughter traceability information of the subjects in the corresponding group for each group, and
    wherein the deriving derives the target carbon emission information, by using the slaughter traceability information of the target subject and the reference carbon emission information for the grade to which the target subject belongs.

8.  The method of claim 1, wherein the subjects in the reference group are divided into n grades (n is a natural number greater than or equal to 2) according to the quality of the livestock product, and the target subject is determined by any one of the n grades,

wherein the obtaining obtains the reference carbon emission information for the grade to which the target subject belongs, by using the slaughter traceability information of the subjects in the group having the same grade as the grade to which the target subject belongs among the subjects of the reference group, and

wherein the deriving derives the target carbon emission information, by using the slaughter traceability information of the target subject and the reference carbon emission information for the grade to which the target subject belongs.

9. The method of claim 8, wherein the certifying comprises applying different reference values according to the grade to which the target subject belongs.

10. The method of claim 9, wherein the reference value for each grade has a value obtained by subtracting a specific ratio of a value for the value of the carbon emission information per average weight of the corresponding group from the value of the carbon emission information per average weight of the corresponding group.

11. The method of claim 10, wherein for the specific ratio, the same ratio value is applied for each grade, or different ratio values are applied for at least 2 grades.

12. The method of claim 1, further comprising transmitting certification information on the low-carbon certified livestock product to a trading system that performs carbon credit trading based on the carbon reduction amount of the low-carbon certified livestock product.

13. The method of claim 12, wherein the transmitting the certification information comprises calculating the carbon reduction information of the low-carbon certified livestock product to transmit the same together with the certification information, and

wherein the trading system performs carbon credit trading based on the carbon reduction information of the low-carbon certified livestock product and performs futures trading.

14. A system, comprising:

a memory for storing slaughter traceability information of a target subject and slaughter traceability information of a reference group which is a group of the same livestock type of subjects as the target subject; and

a controller for processing by using the stored information,

wherein the controller controls to obtain reference carbon emission information which is information related to the average daily carbon emission of the reference group, by using the slaughter traceability information of the reference group, controls to derive target carbon emission information which is information related to the amount of carbon emission per unit weight of the target subject, by using the slaughter traceability information of the target subject and the reference carbon emission information obtained in advance, and controls to certify the livestock product of the target subject as a low-carbon certified livestock product, when the value of the target carbon emission information decreases below a reference value.

15. A system, comprising:

a certification system for performing certification of a livestock product of a target subject; and

a trading system for performing carbon credit trading based on the carbon reduction amount of a livestock product certified in the certification system,

wherein the certification system obtains reference carbon emission information which is information related to the average daily carbon emission of a reference group, by using slaughter traceability information of the reference group which is a group of the same livestock type of subjects as the target subject, derives target carbon emission information which is information related to the amount of carbon emission per unit weight of the target subject, by using slaughter traceability information of the target subject and the reference carbon emission information obtained in advance, and certifies the livestock product of the target subject as a low-carbon certified livestock product, when the value of the target carbon emission information decreases below a reference value.

【FIG. 1】

【FIG. 2】

| Obtain livestock information | — S101 |
|---|---|

↓

| Extract information related to carbon emissions | — S102 |
|---|---|

↓

| Calculate carbon emissions | — S103 |
|---|---|

↓

| Cerfity | — S104 |
|---|---|

[FIG. 3]

```
┌─────────────────────────────┐
│   Obtain reference carbon    │
│ emission information by using │ ──── S201
│    the slaughter traceability │
│ information of reference group│
└─────────────────────────────┘
              │
              ▼
┌─────────────────────────────┐
│  Derive target carbon emission│
│      information by using     │
│    the slaughter traceability │ ──── S202
│ information of target subject │
│       and the reference       │
│  carbon emission information  │
└─────────────────────────────┘
              │
              ▼
┌─────────────────────────────┐
│   Certify as low carbon if the│
│    value of the target carbon │ ──── S203
│ emission information is less than│
│        reference value        │
└─────────────────────────────┘
```

【FIG. 4】

(a)

K < 0.967　　　　　K = 1　　　　　1.033 < K

Low　　　　　Middle (M₁)　　　　　Upper　　　$r_1=3.3\%, D=1$

(b)

K < 0.9　　　　　K = 1　　　　　1.1 < K

Low　　　　　Middle (M₂)　　　　　Upper　　　$r_2=10\%, D=1$

[FIG. 5]

Obtain reference carbon emission information by grade using the slaughter traceability information of reference group — S301

Derive target carbon emission information by using the slaughter traceability information of target subject and the reference carbon emission information of the grade to which the target subject belongs — S302

Certify as low carbon if the value of the target carbon emission information is less than reference value — S303

**【FIG. 6】**

| Meat Quality Grade | Number of Grade Appearances in Group (N) | Distribution of Subjects By Carbon Emission Efficiency (Carbon Emissions per kg of Meat) | Mean | Standard Deviation | Certification Criteria | Number of Subjects Meeting Certification Criteria (n) |
|---|---|---|---|---|---|---|
| 1++ | $N_1$ | | $M_1$ | SD | $< M_1 - 3.3\%$ | $n_1$ |
| 1+ | $N_2$ | | $M_2$ | SD | $< M_2 - 3.3\%$ | $n_2$ |
| 1 | $N_3$ | | $M_3$ | SD | $< M_3 - 3.3\%$ | $n_3$ |
| 2, 3 | $N_4$ | | $M_4$ | SD | $< M_4 - 3.3\%$ | $n_4$ |
| Total | N | | M | SD | $< M - 3.3\%$ | n |

【FIG. 7】

| Meat Quality Grade | Number of Grade Appearances in Group (N) | Distribution of Subjects By Carbon Emission Efficiency (Carbon Emissions per kg of Meat) | Carbon Emissions per kg of Meat | Standard Deviation | Certification Criteria | Number of Subjects Meeting Certification Criteria (n) |
|---|---|---|---|---|---|---|
| 1++ | 4,128 | | 28.14 | 3.25 | < 27.21 | 1,717 (41,59%) |
| 1+ | 7,556 | | 28.93 | 3.48 | < 27.98 | 3,141 (41.57%) |
| 1 | 4,596 | | 29.48 | 3.67 | < 28.50 | 1,944 (42.30%) |
| 2.3 | 1,864 | | 30.85 | 5.31 | < 29.83 | 891 (47.80%) |
| Total | 18,144 | | 29.09 | 3.79 | | 7,693 (42.40%) |

【FIG. 8】

```
        100                                    200

 ┌─────────────────┐                   ┌──────────────────┐
 │  Certification  │   Certification   │  Trading System  │
 │     System      │ ──Information,──► │                  │
 └─────────────────┘       etc         └──────────────────┘

                           1
```

【FIG. 9】

【FIG. 10】

```
100 ─┐  ┌─────────────┐              ┌─────────────┐
     └──│ Certification│──────────────│Trading System│── 200
        │   System     │              └─────────────┘
        └─────────────┘                     │
                │                            │
 10 ─┐  ┌─────────────┐              ┌─────────────┐
     └──│ First Terminal│             │ Intermediary│── 40
        └─────────────┘              │   Server     │
                                     └─────────────┘
```

1b

## INTERNATIONAL SEARCH REPORT

| International application No. |
|---|
| **PCT/KR2021/012455** |

### A. CLASSIFICATION OF SUBJECT MATTER

**G06Q 50/26**(2012.01)i; **G06Q 50/02**(2012.01)i; **G06Q 30/06**(2012.01)i

According to International Patent Classification (IPC) or to both national classification and IPC

### B. FIELDS SEARCHED

Minimum documentation searched (classification system followed by classification symbols)

G06Q 50/26(2012.01); A01K 5/01(2006.01); A23K 10/00(2016.01); A23K 50/10(2016.01); G01N 33/497(2006.01); G06Q 50/00(2006.01); G06Q 50/02(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가축(domestic animals), 도축(butchery), 탄소배출(carbon emission), 무게(weight), 인증(certification)

### C. DOCUMENTS CONSIDERED TO BE RELEVANT

| Category* | Citation of document, with indication, where appropriate, of the relevant passages | Relevant to claim No. |
|---|---|---|
| A | 국립축산과학원. 지구온난화에 대응한 탄소절감형 축산물 유통기술 개발. March 2015 (NATIONAL INSTITUTE OF ANIMAL SCIENCE. Development of carbon reduction system for meat production, processing and distribution). [Retrieved on 24 February 2022]. Retrieved from <URL: https://scienceon. kisti.re.kr/commons/util/originalView.do?cn=TRKO201500010318&dbt=TRKO&rn=>. See pages 72-98. | 1-15 |
| A | KR 10-2017-0046447 A (WECOS CO., LTD.) 02 May 2017 (2017-05-02) See paragraphs [0042]-[0163] and claims 1-10. | 1-15 |
| A | JP 2009-205315 A (NIPPON JOGESUIDO SEKKEI CO., LTD.) 10 September 2009 (2009-09-10) See paragraphs [0018]-[0030]. | 1-15 |
| A | KR 10-2016-0105412 A (ALLTECH, INC.) 06 September 2016 (2016-09-06) See paragraphs [0092]-[0156]. | 1-15 |
| A | KR 10-2011-0111198 A (LIM, Song Tak) 10 October 2011 (2011-10-10) See paragraphs [0064]-[0075]. | 1-15 |

[✓] Further documents are listed in the continuation of Box C.   [✓] See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 March 2022** | **11 March 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/012455**

**C.    DOCUMENTS CONSIDERED TO BE RELEVANT**

| Category* | Citation of document, with indication, where appropriate, of the relevant passages | Relevant to claim No. |
|-----------|-------------------------------------------------------------------------------------|------------------------|
| A | WO 2011-130538 A2 (C-LOCK INC. et al.) 20 October 2011 (2011-10-20)<br>See paragraphs [0072]-[0105] and claims 1-9. | 1-15 |

Form PCT/ISA/210 (second sheet) (July 2019)

## INTERNATIONAL SEARCH REPORT
### Information on patent family members

| International application No. |
| --- |
| **PCT/KR2021/012455** |

| Patent document cited in search report | | | Publication date (day/month/year) | Patent family member(s) | | | Publication date (day/month/year) |
| --- | --- | --- | --- | --- | --- | --- | --- |
| KR | 10-2017-0046447 | A | 02 May 2017 | None | | | |
| JP | 2009-205315 | A | 10 September 2009 | None | | | |
| KR | 10-2016-0105412 | A | 06 September 2016 | AU | 2014-373779 | A1 | 09 July 2015 |
| | | | | AU | 2018-250502 | A1 | 15 November 2018 |
| | | | | CA | 2839029 | A1 | 02 July 2015 |
| | | | | CN | 106061282 | A | 26 October 2016 |
| | | | | EP | 3089595 | A1 | 09 November 2016 |
| | | | | SG | 11201604857 | A | 28 July 2016 |
| | | | | US | 2016-0324188 | A1 | 10 November 2016 |
| | | | | WO | 2015-103361 | A1 | 09 July 2015 |
| KR | 10-2011-0111198 | A | 10 October 2011 | None | | | |
| WO | 2011-130538 | A2 | 20 October 2011 | AU | 2009-257821 | A1 | 17 December 2009 |
| | | | | AU | 2009-257821 | B2 | 18 July 2013 |
| | | | | AU | 2011-239541 | A1 | 20 October 2011 |
| | | | | AU | 2011-239541 | B2 | 28 August 2014 |
| | | | | BR | 112012026452 | A2 | 19 December 2017 |
| | | | | BR | 112012026452 | B1 | 25 August 2020 |
| | | | | CA | 2725380 | A1 | 17 December 2009 |
| | | | | CA | 2725380 | C | 20 August 2013 |
| | | | | CA | 2796450 | A1 | 20 October 2011 |
| | | | | CA | 2796450 | C | 25 October 2016 |
| | | | | CN | 102105050 | A | 22 June 2011 |
| | | | | CN | 102105050 | B | 30 January 2013 |
| | | | | EP | 2291072 | A2 | 09 March 2011 |
| | | | | EP | 2291072 | B1 | 31 July 2013 |
| | | | | EP | 2558855 | A2 | 20 February 2013 |
| | | | | EP | 2558855 | B1 | 08 October 2014 |
| | | | | EP | 2653031 | A1 | 23 October 2013 |
| | | | | IL | 209479 | A | 31 January 2011 |
| | | | | IL | 209479 | B | 26 February 2015 |
| | | | | NZ | 589429 | A | 22 February 2013 |
| | | | | NZ | 602979 | A | 30 May 2014 |
| | | | | US | 2009-0288606 | A1 | 26 November 2009 |
| | | | | US | 2011-0192213 | A1 | 11 August 2011 |
| | | | | US | 7966971 | B2 | 28 June 2011 |
| | | | | US | 8307785 | B2 | 13 November 2012 |
| | | | | WO | 2009-151927 | A2 | 17 December 2009 |
| | | | | WO | 2009-151927 | A3 | 11 March 2010 |
| | | | | WO | 2011-130538 | A3 | 15 March 2012 |

Form PCT/ISA/210 (patent family annex) (July 2019)

**EP 4 358 011 A1**